# FASCICULE DE BREVET EUROPEEN

(11) **EP 3 433 513 B1**
(45) Date de publication et mention de la délivrance du brevet: **23.08.2023**
(21) Numéro de dépôt: 17710599.6
(22) Date de dépôt: 21.02.2017
(51) Int. Cl.: F16H 48/38

(54) **COURONNE DE DIFFERENTIEL EQUIPEE D'UNE CIBLE DE MESURE DE SA VITESSE DE ROTATION ET AGENCEMENT DANS UNE BOITE DE VITESSES**
DIFFERENTIALZAHNKRANZ MIT EINEM ZIEL ZUR MESSUNG DER DREHZAHL DAVON UND ANORDNUNG IN EINEM GETRIEBE
DIFFERENTIAL RING GEAR EQUIPPED WITH A TARGET FOR MEASURING THE ROTATION SPEED THEREOF AND ARRANGEMENT IN A GEARBOX

(30) Priorité: 24.03.2016 FR 1652549
(43) Date de publication de la demande: 30.01.2019
(73) Titulaire: Renault s.a.s, 92100 Boulogne Billancourt (FR); NISSAN MOTOR CO., LTD., Kanagawa 221-0023 (JP)
(72) Inventeur: POMMIES, Laurent, 78160 Marly Le Roi (FR); DA SILVA, Paulo, 78500 Sartrouville (FR)
(74) Mandataire: Renault Group
(86) Numéro de dépôt international: PCT/FR2017/050384
(87) Numéro de publication internationale: WO 2017/162942

(56) Documents cités:
- EP-A1- 0 911 547
- DE-A1-102009 054 521
- DE-A1-102014 202 425
- US-A- 5 032 790
- US-A1- 2004 134 307
- US-B1- 6 796 404

## Description

### DOMAINE TECHNIQUE DE L'INVENTION

La présente invention concerne une couronne de différentiel de transmission de véhicule automobile dont on veut mesurer de manière précise et fiable la vitesse de rotation.

L'invention concerne aussi un agencement, dans une boîte de vitesses de véhicule automobile, pour la mesure de la vitesse de rotation d'une couronne de différentiel.

### ETAT DE LA TECHNIQUE

Pour l'utilisation et notamment la commande d'une transmission de véhicule automobile, et notamment d'une boîte de vitesses appartenant à une telle transmission, il est nécessaire de disposer d'informations ou de données précises relatives à la vitesse ou régime de rotation de certains des composants, tels que par exemple un arbre de la boîte de vitesses et/ou la couronne d'un différentiel appartenant à une telle transmission et qui est par exemple au moins partiellement intégré à une boîte de vitesses.

De tels besoins sont notamment présents dans le cadre des transmissions dites "hybrides" dans lesquels il est nécessaire de pouvoir piloter avec précision différentes sources de puissance, thermique et électrique, qui sont reliées à un ensemble commun de transmission.

Il est notamment nécessaire de pouvoir piloter ces sources en couple et/ou en régime ou vitesse de rotation en vue de la commande des changements de rapports de transmission.

En effet, un tel type de transmission hybride ne possédant pas d'embrayage, seule une parfaite synchronisation des régimes ou vitesses de rotation, notamment des arbres de la boîte de vitesses, peut permettre un passage fiable et de qualité des différents rapports ou vitesses, tout particulièrement sans à-coups.

Pour disposer de l'ensemble de ces informations précises sur les régimes de rotation des différents arbres dans la boîte de vitesses ou de composants intégrés pour tout ou partie dans la boîte de vitesses, il est connu de faire appel à l'association de couples comportant chacun un capteur de défilement "fixe" et d'une cible liée en rotation aux composants dont on désire mesurer le régime de rotation et qui défile devant le capteur.

Quelle que soit la technique de détection utilisée par le capteur (optique, magnétique, etc.), la cible associée se présente sous la forme d'un ensemble de dents réparties circonférentiellement qui est solidaire en rotation du composant dont on désire mesurer le régime de rotation.

Un premier couple capteur-cible est par exemple associé à l'arbre dit de couplage afin de fournir une information représentative du régime de rotation de l'arbre de couplage et de l'arbre primaire de la boîte de vitesses qui sont tous les deux en prise directe et donc représentative du régime de rotation du moteur thermique lié à la transmission.

Il est aussi connu, comme décrit dans le document DE102014202425 A1, d'associer un deuxième couple capteur-cible au niveau du différentiel afin de fournir une information représentative de la vitesse de rotation du différentiel et de l'arbre secondaire de la boîte de vitesses qui sont tous les deux en prise directe, l'arbre secondaire étant plus précisément en prise directe avec la couronne du différentiel.

S'agissant de ce dernier couple visant à mesurer la vitesses de rotation de la couronne du différentiel (elle-même liée en rotation au boîtier différentiel), la conception et l'implantation de la cible doivent répondre à différents impératifs.

La cible de mesure doit comporter un nombre suffisant de dents de manière à fournir une valeur précise du régime du différentiel, et par exemple supérieur à cent dents.

La conception et l'implantation de la cible ne doivent pas avoir d'impact sur l'ensemble de la fonction de lubrification des composants de la boîte de vitesses et du différentiel.

L'implantation de la cible doit aussi permettre l'implantation du capteur associé à l'intérieur de la boîte de vitesses, et par exemple à l'intérieur du carter de la boîte de vitesses.

Enfin, la conception, le dimensionnement et l'implantation de la cible de mesure doit permettre que le différentiel comporte aussi une roue dite "de parking" sur le boîtier du différentiel et qui est apte à coopérer avec un doigt de verrouillage associé ou avec un arbre de la boîte de vitesses.

L'invention vise à proposer une conception de la couronne de différentiel visant à satisfaire aux impératifs techniques mentionnés ci-dessus.

### BREF RESUME DE L'INVENTION

Dans ce but, l'invention propose une couronne de différentiel de transmission de véhicule automobile conformément à la revendication 1.

Selon d'autres caractéristiques de la couronne de différentiel :
- la cible de mesure est agencée dans une face latérale d'orientation radiale de la couronne ;
   Selon l'invention la couronne comporte un corps annulaire périphérique qui comporte :
   - la denture d'engrenage ; et
   - un logement dans lequel est agencée la cible de mesure ;
- le logement est réalisé par usinage ;
- le logement est délimité par une face cylindrique annulaire concave ;
- la cible de mesure est montée axialement à force dans le logement.

L'invention propose aussi une boîte de vitesses comportant un agencement pour la mesure, la vitesse de rotation d'une couronne de différentiel selon la revendication 5.

Selon d'autres caractéristiques de la boîte de vitesses :
- le capteur est agencé axialement en regard des dents de la cible de mesure ;
- le capteur est agencé radialement en regard des dents de la cible de mesure.

### BREVE DESCRIPTION DES FIGURES

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en coupe par un plan passant par les axes de rotation des satellites et les axes des planétaires d'un différentiel de transmission de véhicule automobile selon l'état de la technique ;
- la figure 2 est une vue schématique en perspective illustrant notamment une couronne de différentiel selon l'invention équipée d'une cible de mesure de sa vitesse de rotation associée à un capteur de mesure par lecture axiale ;
- la figure 3 est une vue schématique en section analogue à celle de la figure 1 illustrant la conception et l'agencement de la cible de mesure en association avec la couronne de différentiel représentées à la figure 2 ; et
- les figures 4 et 5 sont des vues analogues à celles des figures 3 et 4 qui illustrent un ensemble similaire dans lequel la cible de mesure est associée à un capteur à lecture radiale

### DESCRIPTION DETAILLEE DES FIGURES

Dans la description qui va suivre donnée à titre non limitatif, des composants identiques analogues, ou similaires seront désignés par les mêmes références.

Afin de faciliter la compréhension de la description et des revendications, on utilisera à titre non limitatif et sans référence à la gravité terrestre, les termes vertical, latéral, transversal, horizontal, etc. en référence au trièdre L, V, T indiqué sur les figures.

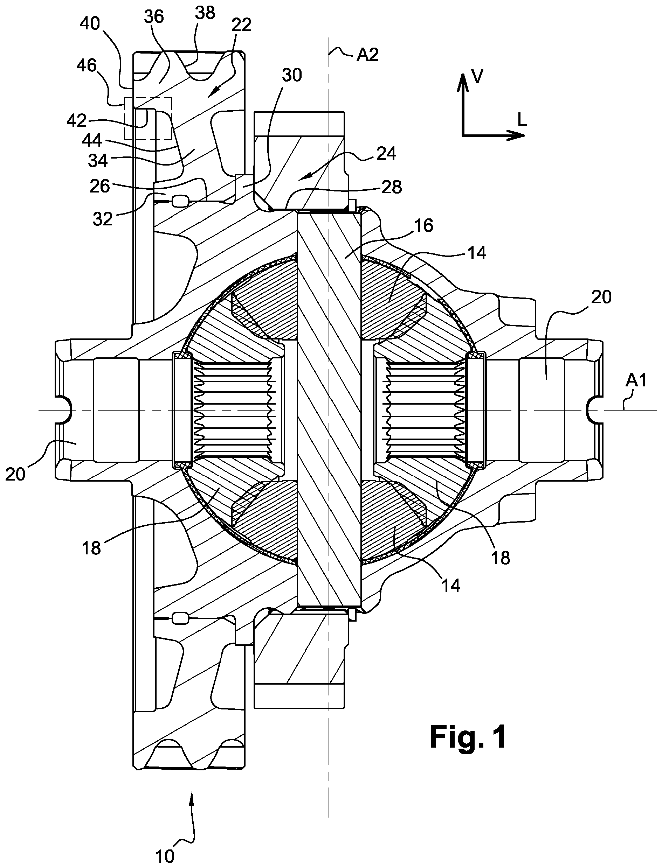

Selon une conception connue d'un différentiel 10 tel qu'illustré schématiquement à la figure 1, celui-ci est constitué d'un boîtier 12 de différentiel à l'intérieur duquel sont montés à rotation des satellites 14, autour d'un axe porte-satellites 16 qui est porté par le boîtier 12 de telle manière que les satellites 14 soient montés à rotation autour d'un axe géométrique vertical A2.

Le boîtier de différentiel 12 loge aussi des planétaires 18 dont chacun est monté sur un axe horizontal 20 auquel il est lié en rotation, les axes 20 étant coaxiaux selon un axe géométrique horizontal A1 orthogonal à l'axe A2.

Le boîtier de différentiel 12 est par exemple une pièce réalisée par moulage de fonderie dont la surface périphérique externe est ici équipée de deux composants supplémentaires, agencés longitudinalement de la gauche vers la droite en considérant la figure 1; le boîtier de différentiel 12 équipé d'une couronne périphérique de différentiel 22; et une roue 24 dite de parking.

La couronne 22 et la roue 24 sont liées en rotation au boîtier de différentiel 12.

La couronne 22 et la roue 24 sont chacune montée sur une portion cylindrique convexe d'orientation axiale A1 qui est usinée, 26 et 28 respectivement,

La couronne 22 et la roue 24 sont séparées longitudinalement par un épaulement radial externe 30 du boîtier de différentiel 12 qui détermine notamment la position axiale relative de la couronne 22 et de la roue de parking 24 sur le boîtier de différentiel 12.

De manière connue, la couronne de différentiel 12 est une pièce métallique réalisée par exemple par forgeage et elle comporte à sa périphérie radialement intérieure un talon cylindrique de fixation 32 qui se prolonge, radialement vers l'extérieur, par un voile 34 d'orientation globalement radiale.

Enfin, la couronne de différentiel 22 comporte, à sa périphérie radialement extérieure, un corps de couronne 36 qui est un corps annulaire périphérique qui comporte la denture d'engrenage 38 permettant notamment la liaison en rotation du boîtier de différentiel 12 avec un arbre de transmission tel qu'un arbre secondaire associé (non représenté) d'une boîte de vitesses (non représentée).

Le corps annulaire périphérique 36 de la couronne de différentiel 22 est délimité axialement selon la direction longitudinale par une face latérale arrière 40 qui s'étend dans un plan radial et par une face annulaire cylindrique concave intérieure 42.

La face cylindrique 42 se prolonge par une face transversale arrière 44 du voile 34 qui est ici de profil tronconique inclinée par rapport au plan radial.

On a entouré à la figure 1 par un cadre en pointillés 46 la zone disponible de la couronne de différentiel 22 (et plus particulièrement du corps 36) dans laquelle, conformément à l'invention et comme cela sera expliqué en détail par la suite, on prévoit d'implanter une cible 50 de mesure de la vitesse ou régime de rotation de la couronne de différentiel 22.

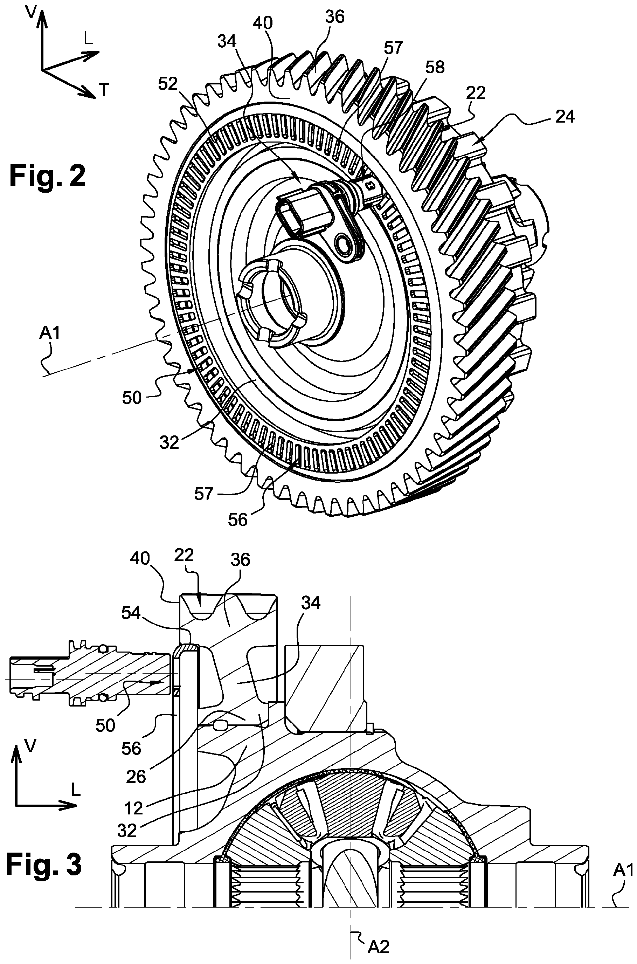

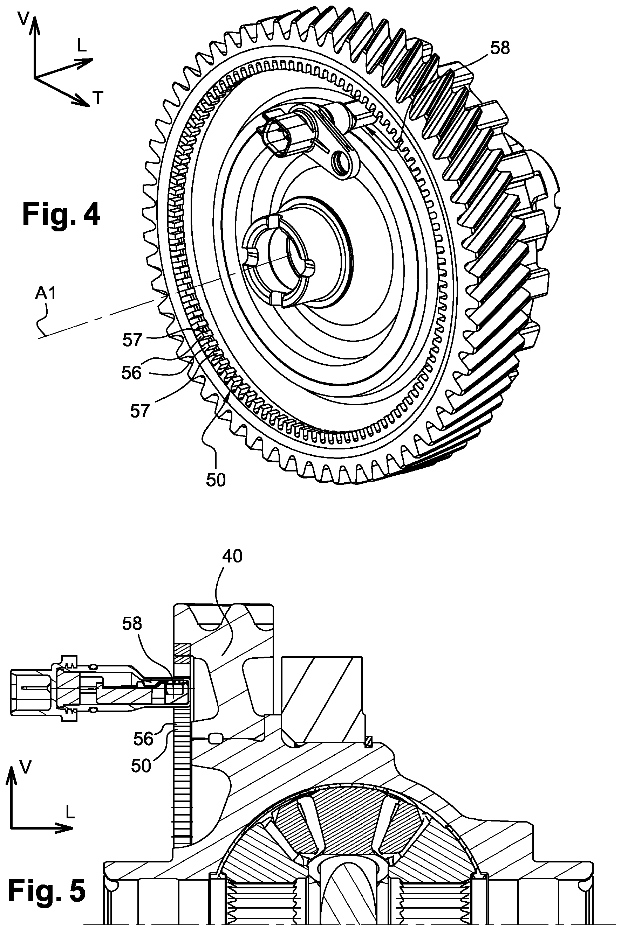

Comme on peut le voir aux figures 2 et 3, ainsi de manière similaire qu'aux figures 4 et 5, l'invention prévoit l'implantation sur la couronne de différentiel 22d'une cible de mesure 50 en forme générale d'anneau et comportant une pluralité de dents réparties circonférentiellement.

Selon les modes de réalisation illustrés aux figures 2 à 5, la cible 50 est agencée globalement dans la face latérale arrière 40 du corps annulaire périphérique 36 de la couronne de différentiel 22.

A cet effet, notamment en vue de permettre son montage et sa fixation par emboîtement axial à force, par exemple par frettage - en assurant un centrage correct et en évitant toute déformation intempestive de la cible de mesure 50 - la cible 50 est agencée dans un logement complémentaire 52 réalisé à la faveur d'un usinage, dans la zone 46, d'une face cylindrique axiale concave dans la face 42 du brut forgé de la couronne de différentiel 22.

Pour le montage, le centrage et la fixation sur le corps annulaire 36 de la couronne de différentiel 22, la cible 50 peut comporter une partie complémentaire 54 sous la forme d'une virole axiale qui s'étend longitudinalement de l'arrière vers l'avant.

Outre sa virole de fixation et de montage 54, la cible 50 comporte ici une série de dents 56 de mesure qui s'étendent dans un plan radial, radialement vers l'intérieur en direction de l'axe A1 et qui sont réparties circonférentiellement ici de manière régulière selon un pas déterminé.

Le nombre de dents 56 est par exemple supérieur à cent.

Les dents 56 sont chacune délimitée par une face arrière 57, toutes les faces 57 étant situées sensiblement dans un même plan radial.

Dans le mode de réalisation illustré aux figures 2 et 3, la détection et la lecture de la mesure de la vitesse de rotation de la cible 50 sont effectuées au moyen d'un capteur associé 58 qui est agencé longitudinalement en regard des faces 57, c'est-à-dire que le capteur 58 effectue ici une lecture dite "axiale" de la rotation de la cible 50.

Le capteur 58 est fixe par rapport à la cible tournante 50 et il est par exemple fixé à une portion de carter de boîte de vitesses (non représentée) par rapport auquel la couronne de différentiel 22 entraîne la cible de mesure 50 en rotation à la vitesse de rotation du boîtier de différentiel 12.

Dans le deuxième mode de réalisation illustré aux figures 4 et 5, la conception générale de la cible 50 et de sa fixation et implantation dans le corps annulaire périphérique 36 de la couronne de différentiel 22 sont identiques à ce qui a été décrit et représenté en référence au premier mode de réalisation illustré aux figures 2 et 3.

Les dents 56 de mesure appartenant à la cible de mesure 50 s'étendent ici globalement radialement et chacune est délimitée par une face radiale interne 57.

Toutes les faces 57 s'étendent globalement dans une même surface cylindrique annulaire concave de manière à permettre ici une lecture dite radiale au moyen du capteur 58 dont l'élément actif s'étend ici en regard des faces 57 en étant reçu radialement "à l'intérieur" du corps de la couronne de différentiel 22 et à l'intérieur de la cible 50.

La conception selon l'invention qui vient d'être décrite n'est pas limitée aux exemples de réalisation et de conception de la cible 50, notamment sous la forme d'un élément en tôle plié et découpé.

La cible peut être réalisée selon toute solution connue compatible avec la nature du capteur 58 qui lui est associé.

## Revendications

1. Couronne (22) de différentiel (10) de transmission de véhicule automobile comportant un corps annulaire périphérique de couronne (36) qui comporte une denture d'engrenage (38) agencée à sa périphérie radiale extérieure, et un logement (52) dans lequel est implantée une cible (50) de mesure de la vitesse de rotation de la couronne, en forme d'anneau comportant une pluralité de dents de mesure (56) réparties circonférentiellement, le logement (52) étant réalisé par usinage et étant délimité par une face cylindrique annulaire concave (42),
**caractérisée en ce que** la cible de mesure (50) est montée axialement à force dans le logement et **en ce que** la couronne comporte, à sa périphérie radialement intérieure, un talon cylindrique de fixation (32) qui se prolonge, radialement vers l'extérieur, par un voile (34) d'orientation globalement radiale, et **en ce que** ladite face cylindrique annulaire concave (42) se prolonge par une face transversale arrière (44) dudit voile (34).

2. Couronne de différentiel selon la revendication 1, **caractérisée en ce que** la cible (50) de mesure est agencée dans une face latérale d'orientation radiale de la couronne (12).

3. Couronne de différentiel selon l'une quelconque des revendications précédentes, **caractérisée en ce que**, pour le montage, le centrage et la fixation sur le corps annulaire périphérique de couronne (36), la cible (50) comporte une partie complémentaire (54) sous la forme d'une virole axiale.

4. Couronne de différentiel selon l'une quelconque des revendications précédentes, **caractérisée en ce que**, la cible (50) comporte une série de dents (56) de mesure qui s'étendent dans un plan radial.

5. Boîte de vitesses de véhicule automobile, comportant un agencement pour la mesure de la vitesse de rotation d'une couronne de différentiel selon l'une quelconque des revendications précédentes, caractérisé en ce cet agencement comporte un capteur (58) qui est fixe par rapport à une portion du carter de la boîte de vitesses, et qui est agencé en regard des dents de la cible de mesure.

6. Boite de vitesses selon la revendication précédente, **caractérisé en ce que** le capteur (58) est agencé axialement en regard des dents (56, 57) de la cible de mesure (50).

7. Boîte de vitesses selon la revendication 5, **caractérisé en ce que** le capteur est agencé radialement en regard des dents (56, 57) de la cible de mesure (50).

## Patentansprüche

1. Zahnkranz (22) eines Differentialgetriebes (10) eines Kraftfahrzeugs mit einem ringförmigen Umfangskörper des Zahnkranzes (36), der an seinem radial äußeren Umfang angeordnete Zahnradzähne (38) aufweist, und einer Aufnahme (52), in die ein Ziel (50) zur Messung der Drehzahl des Zahnkranzes eingebaut ist, das die Form eines Rings mit mehreren in Umfangsrichtung verteilten Messzähnen (56) aufweist, wobei die Aufnahme (52) durch maschinelle Bearbeitung gefertigt wird und durch eine konkave ringförmige zylindrische Fläche (42) begrenzt ist, **dadurch gekennzeichnet, dass** das Messziel (50) in die Aufnahme eingepresst ist und dass der Zahnkranz an seinem radial inneren Umfang einen zylindrischen Befestigungsabsatz (32) aufweist, der radial nach außen durch einen im Allgemeinen radial ausgerichteten Steg (34) verlängert wird, und dass die konkave ringförmige zylindrische Fläche (42) durch eine hintere Querfläche (44) des Stegs (34) verlängert wird.

2. Differentialzahnkranz nach Anspruch 1, **dadurch gekennzeichnet, dass** das Messziel (50) in einer radial ausgerichteten Seitenfläche des Zahnkranzes (12) angeordnet ist.

3. Differentialzahnkranz nach einem der Ansprüche, **dadurch gekennzeichnet, dass** das Ziel (50) für die Montage, Zentrierung und Befestigung am ringförmigen Umfangskörper des Zahnkranzes (36) einen komplementären Teil (54) in Form eines axialen Rings aufweist.

4. Differentialzahnkranz nach einem der Ansprüche, **dadurch gekennzeichnet, dass** das Ziel (50) eine Reihe von Messzähnen (56) aufweist, die sich in einer radialen Ebene erstrecken.

5. Kraftfahrzeuggetriebe mit einer Anordnung zur Messung der Drehzahl eines Differentialzahnkranzes nach einem der Ansprüche, **dadurch gekennzeichnet, dass** diese Anordnung einen Sensor (58) umfasst, der in Bezug auf einen Teil des Getriebegehäuses feststehend ist und der gegenüber den Zähnen des Messziels angeordnet ist.

6. Getriebe nach dem vorangehenden Anspruch, **dadurch gekennzeichnet, dass** der Sensor (58) axial gegenüber den Zähnen (56, 57) des Messziels (50) angeordnet ist.

7. Getriebe nach Anspruch 5, **dadurch gekennzeichnet, dass** der Sensor radial gegenüber den Zähnen (56, 57) des Messziels (50) angeordnet ist.

## Claims

1. Differential ring gear (22) of a differential (10) of a motor vehicle transmission, comprising a peripheral annular ring gear body (36) that comprises gear teeth (38) arranged at its radially outer periphery, and a housing (52) in which there is installed a target (50) for measuring the rotation speed of the ring gear, in the form of a ring comprising a plurality of circumferentially distributed measurement teeth (56), the housing (52) being produced by machining and being delimited by a concave, annular cylindrical face (42), **characterized in that** the measurement target (50) is force fitted axially into the housing and **in that** the ring gear comprises, at its radially inner periphery, a cylindrical attachment lug (32) that is extended, radially outwards, by a web (34) of generally radial orientation, and **in that** said concave, annular cylindrical face (42) is extended by a rear transverse face (44) of said web (34).

2. Differential ring gear according to Claim 1, **characterized in that** the measurement target (50) is arranged in a radially oriented lateral face of the ring gear (12).

3. Differential ring gear according to either one of the preceding claims, **characterized in that**, in order to mount, center and attach it on the peripheral annular ring gear body (36), the target (50) comprises a complementary part (54) in the form of an axial ferrule.

4. Differential ring gear according to any one of the preceding claims, **characterized in that** the target (50) comprises a sequence of measurement teeth (56) that extend in a radial plane.

5. Motor-vehicle gearbox comprising an arrangement for measuring the rotation speed of a differential ring gear according to any one of the preceding claims, **characterized in that** this arrangement comprises a sensor (58) that is fixed relative to a portion of the gearbox housing, and that is arranged facing the teeth of the measurement target.

6. Gearbox according to the preceding claim, **characterized in that** the sensor (58) is arranged axially opposite the teeth (56, 57) of the measurement target (50) .

7. Gearbox according to Claim 5, **characterized in that** the sensor is arranged radially opposite the teeth (56, 57) of the measurement target (50).
